# EUROPEAN PATENT APPLICATION

(11) **EP 2 110 218 A1**
(43) Date of publication of application: **21.10.2009**
(21) Application number: 08425248.5
(22) Date of filing: 14.04.2008
(51) Int. Cl.: B29B 9/06

(54) **Device for plastic material extrusion**

(71) Applicant: Arisi, Vanni, 25046 Cazzago San Martino (BS) (IT)
(72) Inventor: Arisi, Vanni, 25046 Cazzago San Martino (BS) (IT)
(74) Representative: Tirloni, Bartolomeo

(57) **Abstract**

A device for plastic material extrusion, comprising a body (2) defining at least one channel (4) for the passage of a melted plastic material; and a ceramic element (5), coupled with the body (2) and having at least one duct (6) in fluid communication with the passage channel (4); the ceramic element (5) has a free outer surface (8) on the opposite side with respect to the body (2), and defining an outlet opening (6a) of the duct (6) for the delivery of the extruded plastic material.

## Description

The present invention relates to a device for plastic material extrusion.

In particular, the present invention advantageously applies to machines for plastic material pelletization comprising such device, generally immersed in water or hit by a jet of cooling water.

As is known, the devices for plastic material extrusion (sometimes referred to as "extrusion dies") allow a continuous delivery of at least one extrudate of plastic material commonly known as "strand".

These devices comprise a main body, generally of cylindrical shape, in which at least one (typically a plurality thereof) channel for the passage of plastic material is obtained. Said body has an inner surface on which a cone for the distribution of melted plastic material develops. On the inner surface at least one (typically a plurality thereof) inlet opening is defined, apt to allow the introduction of plastic material into the corresponding channels. The melted material is conveyed from the cone to the inner surface of the body and forced into the inlet opening as a result of a pressure exerted onto said material.

An outer surface develops on the opposite side of the inner surface, on which outer surface at least one (typically a plurality thereof) opening for the delivery of plastic material getting out of the corresponding channel develops.

The outer surface is immersed in water or hit by a jet of water, so as to cool the material extruded from the delivery opening. A cutting blade works on the outer surface, said blade being made of metal and apt to cut the plastic material during extrusion, so as to obtain plastic products having a predefined length.

In particular, in some applications the cutting blade is mobile on the outer surface so as to scrape a corresponding sharp edge on said outer surface. As a result, when the sharp edge gets on the delivery openings, the extruded material is cut and separated from the remaining material which is still inside the channel.

The devices of the type described above, however, have some relevant drawbacks. These drawbacks are mainly related to the scraping action of the blade on the main body.

As a matter of fact, the scraping contact between the blade and the outer surface causes a progressive damage to the sharp edge. Therefore, blades are subject to a fast wear and have to be disassembled so as to be replaced or sharpened, which results in disadvantages in economic terms and for manufacturing times of plastic products, also due to idle times. It should also be considered that an excessive wear of the cutting blade causes the formation of burrs on the sharp edge, which may run through and therefore damage the outer surface of the body and/or the corresponding delivery openings.

Under these circumstances, the technical task underlying the present invention is to propose a device for plastic material extrusion, which can obviate one or more of the above referred drawbacks.

The main aim of the present invention is to provide a device for plastic material extrusion, which can enhance blade performance when cutting the extruded material. These and other aims, as shall emerge in the course of the present description, are basically achieved by a device for plastic material extrusion having the characteristics listed in claim 1 and/or in one or more dependent claims.

Further characteristics and advantages of the invention shall be more evident from the description of a preferred, though not exclusive embodiment of a device for plastic material extrusion, in accordance with the following detailed specification together with the following figures:
- Figure 1 shows a partially sectioned perspective view of the device for plastic material extrusion according to the invention;
- Figure 2 shows an exploded perspective view of the device of Figure 1;
- Figure 3 shows a sectioned view in side elevation of the device of Figure 1;
- Figure 3a shows a magnified view of a construction detail of the device shown in Figure 3; and
- Figure 4 shows a sectioned view in side elevation of a second embodiment of the device for plastic material extrusion according to the invention.

With reference to the accompanying figures, the device for plastic material extrusion according to the invention is globally referred to with the numeral 1.

It should first be said that the device 1, commonly known as "extrusion die", applies in particular to machines for plastic material pelletization in general. The device 1 is preferably of the type apt to be immersed in water or to be hit by a jet of water, so as to cool the plastic material during its extrusion.

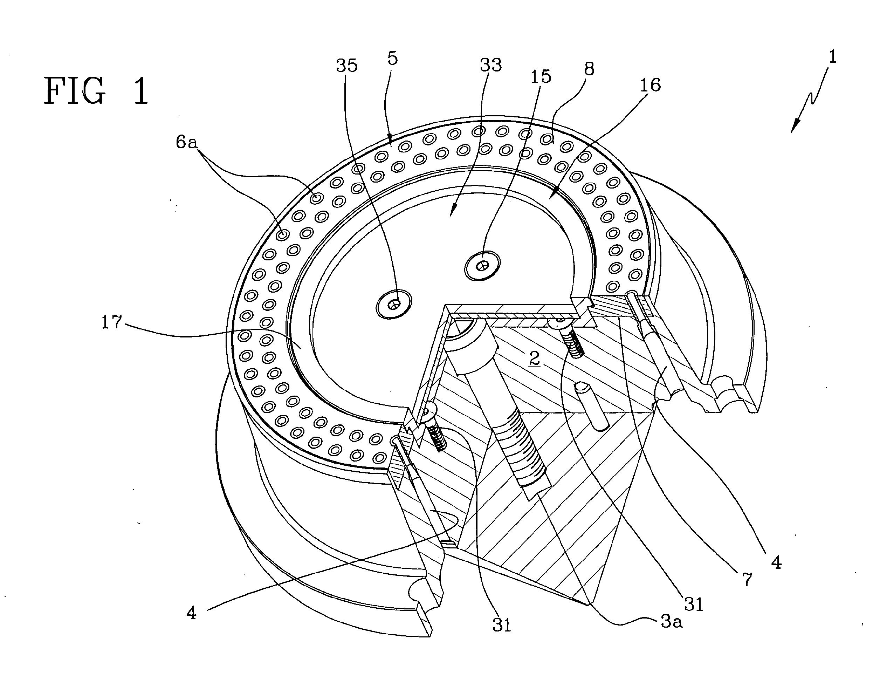

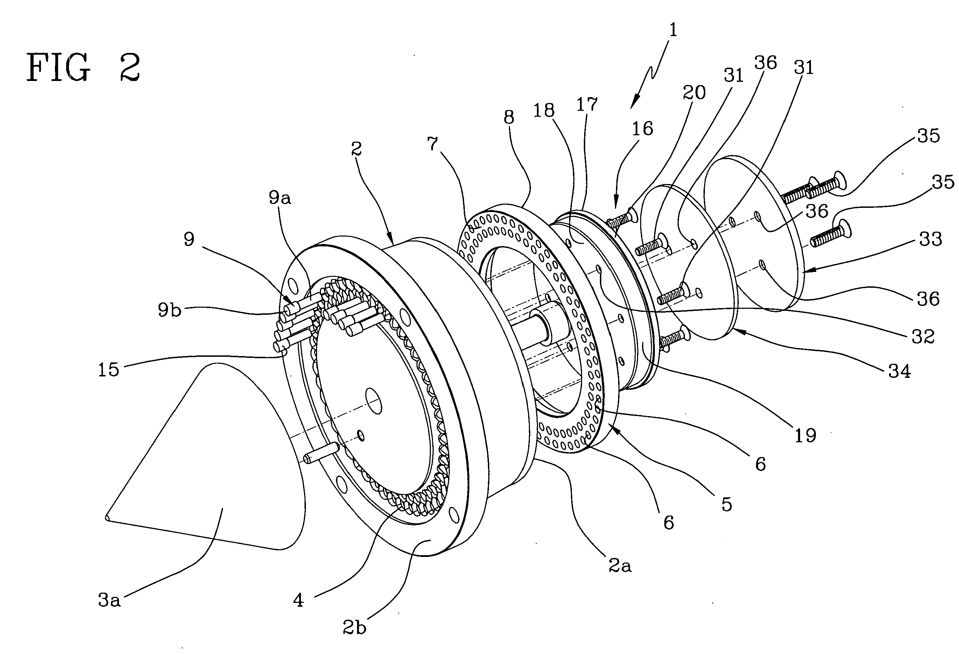

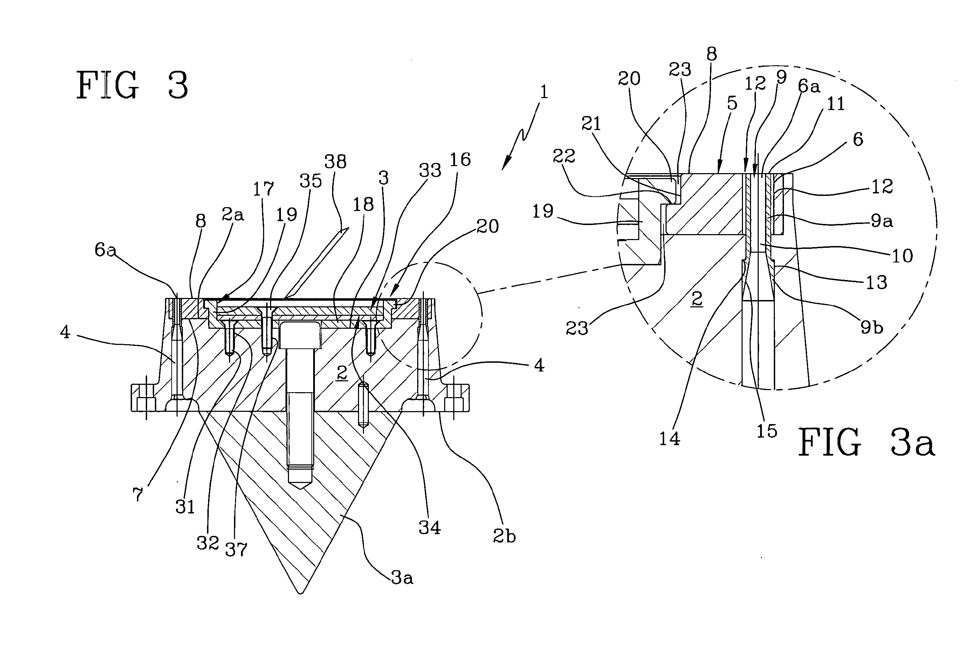

As is shown in the accompanying figures, the device 1 has a body 2 having a basically cylindrical shape and defining a first and a second face 2a, 2b, both basically circular and opposed to one another along the direction of a longitudinal axis. As is shown in Figures 1-3a, and in particular in the sectioned view of Figure 3, on the first face 2a a circular seat 3 is obtained, which shall be described in further detail in the course of the present specification. On the second face 2b a cone 3a for conveying and distributing the plastic material is associated (e.g. by means of a threaded bolt as can be seen in the figures). A small cylinder, which can be seen in the figures, prevents the relative rotation of the cone 3a with respect to the body 2.

The body 2, preferably made of metal, further defines at least one channel 4 for the passage of a previously melted plastic material, which channel 4 puts in communication the first 2a and the second face 2b with one another.

Preferably, the body 2 has a plurality of channels 4, typically arranged in one or more concentric rows (two rows in the accompanying figures) and extending on the whole peripheral circular development of said body 2.

According to the present invention, the device 1 further comprises at least one ceramic element 5, coupled with the body 2 and equipped with at least one duct 6 in fluid communication with a corresponding passage channel 4.

In further detail, the ceramic element 5 is basically ring-shaped and is advantageously housed inside said circular seat 3. The ceramic element 5 has an inner surface 7 abutting onto the first face 2a of the body 2, and a free outer surface 8, opposed to the inner one 7.

Advantageously, the ceramic element 5 has a plurality of ducts 6, each of them being arranged on a corresponding channel 4 of the body 2 so as to be in fluid communication with said channel 4.

Each duct 6 has an outlet opening 6a (Figure 1) obtained on the outer surface 8, through which the extruded plastic material is delivered outside the device 1.

As is better shown in Figures 3 and 3a, the device 1 further has at least one cylindrical element 9, in the example a plurality of cylindrical elements 9, preferably made of hardened steel, and each of which is inserted into a corresponding duct 6 and passage channel 4, so as to lie between the melted plastic material flowing in the duct 6 and the ceramic disc 5. Advantageously, the element 9 protects the ceramic disc 5 from any mechanical stress that might generate cracks inside said disc. In particular, the cylindrical element 9 has a longitudinal development corresponding to the direction of passage of the plastic material inside the duct 6 and channel 4. Moreover, the cylindrical element 9 has a first portion 9a extending inside the corresponding duct 6, and a second portion 9b developing in at least one portion of the channel 4. It is further to be noted that the cylindrical element 9 has inside an area 10 for the passage of the plastic material, which defines the section of the extruded material outside the outlet opening 6a. Said area 10 lies on the first portion 9a.

It should be pointed out that in the examples shown here, the cylindrical element 9 has a basically tubular shape and defines by way of example only one said area 10. In the following, for clarity's sake, such solution shall be referred to. However, the present invention also includes the case in which the cylindrical element 9 defines a plurality of separate passage areas 10, each of them being apt to let the plastic material flow for the extrusion of a separate "strand". Each of said areas 10 puts the channel 4 in fluid communication with the outlet opening 6a.

With particular reference to Figure 3a, the first portion 9a of the tubular element 9 has a ring-shaped outer surface 11 housed in the outlet opening 6a and coplanar with the outer surface 8 of the ceramic element 5. Still referring to Figure 3a, the tubular element 9 is inserted with a given clearance in the duct 6, thus defining a hollow space 12 between the outer cylindrical surface of the first portion 9a and the inner cylindrical surface of the ceramic element 5 defining said duct 6.

Said hollow space 12 allows to compensate thermal expansions of the tubular element 9 due to temperature change from a non-operating condition of the device, in which it is typically at room temperature (as shown in the accompanying figures), to an operating condition in which at least some parts of the device 1 (such as for instance the tubular element 9, the ceramic element 5, the body 2, the clamping disc 17) are at high temperature (since the plastic material, so as to remain liquid, has to pass along the area 10 at high temperature, e.g. about 300°C).

Said hollow space 12 is advantageously apt to accept a thermal expansion of the cylindrical element 9 corresponding to a thermal change thereof of at least 250°C. Advantageously, despite the thermal expansion of the tubular element 9 when passing from room temperature to the operating temperature of the extrusion die (with a temperature change of at least 250°C), said element does not exert a pressure on the ceramic element 5 (which by its nature does not undergo significant thermal expansions) and protects the latter from possible cracks or breaks. The second portion 9b of the tubular element 9 comprises an anchoring portion 13 associated by mechanical joint to an inner abutment portion 14 of the channel 4, so as to prevent an axial sliding of the tubular element 9 with respect to the body 2 (and to the ceramic element 5) under the thrust exerted by the melted material.

In further detail, the anchoring portion 13 has a larger outer size (e.g. diameter) of a cross section than the outer size (e.g. diameter) of a cross section of the remaining part of the second portion 9b. The inner abutment portion 13 is made up of a section narrowing of the channel 4 approaching the ceramic element 5, so as to create a resting surface onto which the anchoring portion 13 abuts. Preferably, as shown in the figures, the anchoring portion 13 has a cylindrical outer surface, like the remaining part of the second portion 9a. Accordingly, the section narrowing 14 of the channel 4 is step-shaped.

Advantageously, the tubular element 9 remains anchored to the abutment portion 14, so as to contrast the longitudinal thrust transmitted by the flowing melted material to the element 9 by friction on the inner surface of the element 9 (also due to high pressures which the material is subject to in this region). The element 9, together with the body 2, bears the mechanical effort resulting from the melted material, without transmitting any part thereof to the ceramic disc 5, which thus remains basically free from mechanical efforts.

As can be seen in particular in Figure 3a, an inner surface 15 of the element 9, having a development shaped like a truncated cone, is apt to connect the section of the channel 4 to the section of the passage area 10, which is typically smaller than the first one. Said inner surface 15 lies on the second portion 9b.

The device further comprises blocking means 16 so as to firmly engage the ceramic element 5 with the body 2, particularly in said circular seat 3.

Said blocking means 16 preferably comprise a clamping disc 17 arranged in the seat 3 inside the ceramic element 5, and having a basically symmetrical cylindrical shape. More particularly, the clamping disc 17 has a flat central portion 18, basically disc-shaped and abutting onto the first face 2a of the body 2, preferably housed at least partially inside another seat obtained (inside the seat 3) on the face 2a. From a peripheral edge of the central portion 18 develops a peripheral portion 19, typically ring-shaped, concentric to the ceramic element 5 and engaged by mechanical joint with said element 5. As better shown in Figure 3 and in the corresponding magnified view of Figure 3a, the peripheral portion 19 has a radially outer projection 20 having a ring-like shape and developing along the outer peripheral edge of the portion 19. Said outer projection 20 faces an inner lateral surface 21 of the ceramic element 5. In further detail, the inner lateral surface 21 has a shoulder 22 defining a ring-shaped recess of said lateral surface 21, obtained on the outer surface 8. Inside the shoulder 22 the outer projection 20 of the peripheral portion 19 is housed, thus keeping the ceramic element 5 engaged with the body 2.

Referring in particular to Figure 3a, it should be noted that the clamping disc 17 is inserted with a given clearance, at least in radial direction, into the ceramic element 5 so as to define, at room temperature as shown in the figure, a hollow space 23 between the inner lateral surface 21 of said element 5 and the outer lateral surface of the clamping disc 17 (in the example the outer lateral surface of said peripheral portion 19, including the projection 20). The hollow space 23 is apt to restrain a radial thermal expansion of the clamping disc 17 corresponding to a thermal change thereof of at least 250°C.

Thus, if the clamping disc 17 is subject to thermal expansion as shown above, the clearance 23 enables a radially outer expansion of the peripheral portion 19, without interfering with the ceramic element 5. Advantageously, as already described above, despite the expansion of the peripheral portion 19, no pressure is exerted onto the ceramic element 5 (resulting in break or damage).

In addition, so as to advantageously increase the stability of the connection between the ceramic element 5 and the body 2, a gluing element, not shown in the accompanying figures and not described in detail since it is of known type, can be provided for between the longitudinally inner surface 7 of the ceramic element 5 and the face 2a of the body 2.

The clamping disc 17 is connected to the body 2 by way of at least one blocking screw 31 housed in a seat 32, for instance made up of a through hole obtained in the central portion 18 and in a threaded seat obtained in the body 2. Preferably, as shown in the accompanying figures, the clamping disc 17 has a series of blocking screws 31, each of which is screwed into a corresponding threaded seat 32. The device 1 further comprises a first and a second plate 33, 34, one placed on top of the other and both associated to the clamping disc 17.

In further detail, the second plate 34 is preferably basically disc-shaped and is made of heat-refractory material. Said second plate 34 is placed between the first plate 33 and the central portion 18 of the clamping disc 17, so as to advantageously prevent heat loss towards the first plate 33.

The first plate 33, also having preferably a basically circular peripheral development, is preferably made of stainless steel and is engaged fluid-tight onto said central portion 18. It is advantageously apt to prevent the passage of liquid towards the clamping disc 17 and to connect the second plate 34 to the device 1.

Under these circumstances, it should be noted that the first and the second plate 33, 34 are housed radially inside the peripheral portion 19, and the first plate 33 can be seen from outside.

Preferably, the first plate 33 is equipped with at least one, typically a plurality of blocking screws 35 getting through corresponding holes 36 obtained in the first and second plate 33, 34, so as to be screwed into seats 37, each of them being made up for instance of a through hole obtained in the central portion 18 and a threaded seat obtained in the body 2. The first and second plate are connected to the clamping disc 17 and to the body 2.

Figure 3 schematically shows a blade 38, which is not essential to the present invention, for cutting the plastic material extruded through the outlet openings 6a.

The blade 38 has a sharp edge abutted onto the outer surface 8 of the ceramic element 5 and mobile, typically with rotational motion, on said outer surface 8 so as to cut the material getting out of the opening 6a.

Thanks to the chemical and physical properties of the ceramic material which the element 5 is made of, the sharp edge of the blade 38 is not damaged as a result of its scraping on the outer surface 8.

Stated otherwise, the presence of the ceramic material on the scraping surface 8 eliminates in practice the phenomenon of wear and damage of the blade 38. As a result, the blade 38 can be used for longer times without being periodically replaced or sharpened.

Moreover, the Applicant has also surprisingly found that the outer surface 8 made of ceramic material continuously sharpens the sharp edge of the blade 38 when said edge scrapes said surface 8. Thus, not only does the surface 8 prevent the wear of the sharp edge, but it also gives an active contribution to the sharpening thereof. Concerning this, it should be noted that the ring-shaped surfaces 11 of the corresponding tubular elements 9, arranged on the outer surface 8, typically come into contact with the blade 38 when the latter scrapes the surface 8. However, this contact does not result in the blade 38 being blunt, probably both due to the small scraping surface of the ring-shaped surfaces 11, and to the sharpening effect of the ceramic outer surface 8.

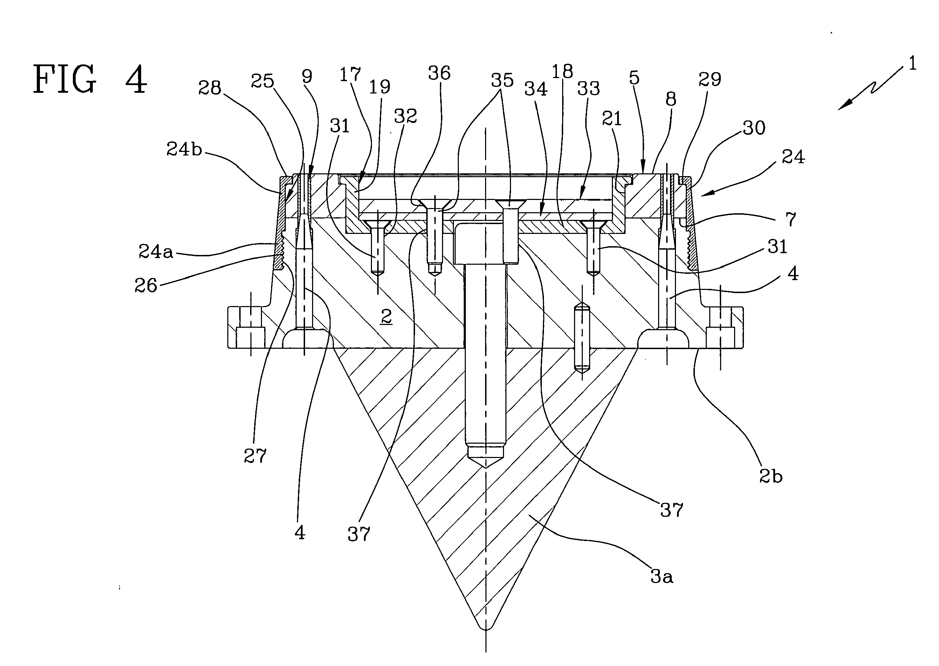

Figure 4 shows a second embodiment of the device 1 according to the present invention. Where necessary, the same numerals as above have been used as reference for structurally and/or functionally similar elements, which shall therefore not be described further.

The blocking means 16 of the second solution further comprise a clamping ring 24 arranged radially outside the ceramic element 5. In particular, the clamping ring 24 has a radially inner surface 25 facing the outer lateral wall of the ceramic element 5 and the outer lateral (and cylindrical) wall of the body 2.

In further detail, the clamping ring 24 has a lower portion 24a on whose inner surface is obtained a threading 26 that can be coupled by screwing with a threading 27 placed on the outer lateral wall of the body 2. On the longitudinally opposite side with respect to the lower portion 24a lies an upper portion 24b, on whose free end develops on the circumference thereof a projection 28 having a ring-shaped development and oriented radially towards the center of the device 1. As described above referring to the projection 20 of the peripheral portion 19, also said projection 28 is coupled with an auxiliary shoulder 29 obtained on an outer lateral surface 30 of the ceramic element 5, opposed to the inner lateral surface 31.

Under these circumstances, the ceramic element 5 is fastened on radially opposite sides by the clamping ring 24 (placed outside the ceramic element 5) and by the clamping disc 17 (placed inside the ceramic element 5), respectively.

It is evident that the present invention also includes the case in which the ceramic element 5 is fastened to the body 2 only by the clamping ring 24 placed outside the ceramic element. In this case, the ceramic element 5 can also be basically disc-shaped.

## Claims

1. A device for plastic material extrusion, **characterized in that** it comprises:
- a body (2) defining at least one channel (4) for the passage of a melted plastic material; and
- a ceramic element (5), coupled with said body (2) and having at least one duct (6) in fluid communication with the passage channel (4);
- said ceramic element (5) having a free outer surface (8) on the opposite side with respect to the body (2), and defining at least one outlet opening (6a) of the duct (6) for the delivery of the extruded plastic material.

2. The device according to the preceding claim, **characterized in that** it further comprises at least one cylindrical element (9), having a first portion (9a) inserted into said duct (6), and a second portion (9b) inserted into said channel (4); said cylindrical element (9) having inside at least one passage area (10) for the plastic material.

3. The device according to the preceding claim, **characterized in that** said first portion (9a) of the cylindrical element (9) has a surface (11) arranged in said outlet opening (6a) and coplanar with the free outer surface (8) of the ceramic element (5).

4. The device according to claim 2 or 3, **characterized in that** said second portion (9b) has an anchoring area (13) associated by mechanical joint to an inner abutment portion (14) of said channel (4) so as to prevent an axial sliding of the cylindrical element (9) with respect to the body (2), at least towards the ceramic element (5).

5. The device according to any one of the claims 2 to 4, **characterized in that** said cylindrical element (9) is inserted with a given clearance in said duct (6), so as to define at room temperature a hollow space (12) between the first portion (9a) of said element (9) and the duct (6).

6. The device according to any one of the preceding claims, **characterized in that** said ceramic element (5) is basically ring-shaped.

7. The device according to the preceding claim, **characterized in that** it further comprises blocking means (16) for engaging the ceramic element (5) with the body (2), said blocking means (16) comprising a clamping disc (17) arranged radially inside the ceramic element (5): said clamping disc (17) having a central portion (18) connected to the body (2), and a peripheral portion (19) engaged by mechanical joint with said ceramic element (5).

8. The device according to the preceding claim, **characterized in that** said clamping disc (17) is fastened to the body (2) by at least one blocking screw (31) screwed into a threaded seat (32) obtained in said disc (17) and in the body (2).

9. The device according to claim 7 or 8, **characterized in that** said peripheral portion (19) has a radially outer projection (20) coupled with a shoulder (22) obtained on an inner lateral surface (21) of said ceramic element (5), so as to keep said element (5) engaged with the body (2).

10. The device according to claim 7 or 8 or 9, **characterized in that** said clamping disc (17) is inserted with a given radial clearance into said ceramic element (5), so as to define at room temperature a hollow space (23) between a radially inner lateral surface (21) of said element (5) and a radially outer lateral surface of the clamping disc (17).

11. The device according any one of the claims 7 to 10, **characterized in that** it further comprises a first plate (33) coupled fluid-tight on the central portion (18) of the clamping disc (17), so as to prevent the passage of liquid.

12. The device according to the preceding claim, **characterized in that** it further comprises a second plate (34) placed between said first plate (33) and said central portion (18) of the clamping disc (17); said second plate (34) being made of heat-refractory material.

13. The device according to any one of the preceding claims, **characterized in that** it comprises blocking means (16) for engaging the ceramic element (5) with the body (2), said blocking means (16) comprising a clamping ring (24) arranged outside the ceramic element (5): said ring (24) having an inner lateral surface (25) engaged by mechanical joint with said ceramic element (5).

14. The device according to the preceding claim, **characterized in that** said inner lateral surface (25) of the clamping ring (24) has a projection (28) coupled with a shoulder (29) obtained on an outer lateral surface (30) of said ceramic element (5), so as to keep said element (5) engaged with the body (2).

15. The device according to any one of the claims 2 to 14, **characterized in that** said ceramic element (5) comprises a plurality of ducts (6), each of them in fluid communication with a corresponding passage channel (4); and **in that** it further comprises a plurality of cylindrical elements (9), each of them inserted in a corresponding duct (6) and channel (4).
